(19) Europäisches Patentamt
European Patent Office
Office européen des brevets

(11) **EP 1 706 714 B1**

(12) **FASCICULE DE BREVET EUROPEEN**

(45) Date de publication et mention
de la délivrance du brevet:
**28.02.2007 Bulletin 2007/09**

(51) Int Cl.:
*G01L 1/24* (2006.01)   *F17D 5/00* (2006.01)
*E21B 17/00* (2006.01)

(21) Numéro de dépôt: **04816584.9**

(22) Date de dépôt: **20.12.2004**

(86) Numéro de dépôt international:
**PCT/FR2004/050736**

(87) Numéro de publication internationale:
**WO 2005/064300 (14.07.2005 Gazette 2005/28)**

(54) **DISPOSITIF TUBULAIRE INSTRUMENTE POUR LE TRANSPORT D'UN FLUIDE SOUS PRESSION PAR DES ROSETTES DE BRAGG**

INSTRUMENTIERTE RÖHRENFÖRMIGE EINRICHTUNG ZUM TRANSPORT EINES UNTER DRUCK STEHENDEN FLUIDS UNTER VERWENDUNG VON BRAGG-GITTER-ROSETTEN

INSTRUMENTED TUBULAR DEVICE FOR THE TRANSPORT OF A PRESSURISED FLUID USING BRAGG GRATING ROSETTES

(84) Etats contractants désignés:
**AT BE BG CH CY CZ DE DK EE ES FI FR GB GR HU IE IS IT LI LT LU MC NL PL PT RO SE SI SK TR**

(30) Priorité: **22.12.2003 FR 0351168**

(43) Date de publication de la demande:
**04.10.2006 Bulletin 2006/40**

(73) Titulaire: **COMMISSARIAT A L'ENERGIE ATOMIQUE**
**75015 Paris (FR)**

(72) Inventeurs:
• **MAGNE, Sylvain**
**F-92320 CHATILLON (FR)**
• **FERDINAND, Pierre**
**F-78800 HOUILLES (FR)**
• **DANIEL, Pierre-Jean**
**F-91570 BIEVRES (FR)**

(74) Mandataire: **Poulin, Gérard et al**
**Brevatome**
**3, rue du Docteur Lancereaux**
**75008 Paris (FR)**

(56) Documents cités:
EP-A- 0 892 250       EP-A- 1 296 117
WO-A-03/076887        US-A- 5 726 744
US-B1- 6 450 037      US-B1- 6 586 722
US-B1- 6 644 848

**EP 1 706 714 B1**

**Description**

**DOMAINE TECHNIQUE**

La présente invention concerne un dispositif tubulaire instrumenté pour le transfert d'un fluide sous pression, notamment dans le domaine de la prospection pétrolière, et dans celui du transport de gaz ou d'hydrocarbures.

**ÉTAT DE LA TECHNIQUE ANTÉRIEURE**

Dans le domaine de la prospection pétrolière, les gisements ont tendance à se raréfier. L'exploitation des nouveaux gisements s'effectue de plus en plus souvent en mer ("off-shore"), voire en haute mer et en grande profondeur ("deep off-shore"). Dans ce contexte, l'assistance en temps réel aux services de production des champs pétroliers "offshore" et "deep off-shore" est un besoin nouveau et spécifique aux développements consécutifs à une telle exploitation.

Dans l'objectif de réduire l'encombrement et les coûts, les tubes utilisés ont un fonctionnement proche de leurs limites de conception. Les contraintes et la fatigue accumulées sont donc importantes.

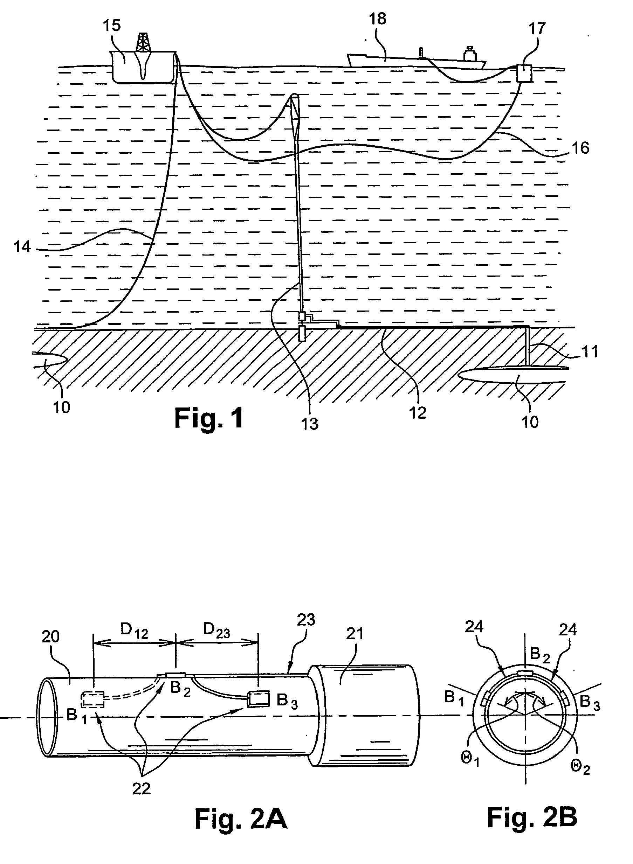

Comme illustré sur la figure 1, le fluide hydrocarbure sous pression (typiquement 70 bar ou plus) et sous haute température (typiquement 100˚C ou plus) est extrait d'un ou plusieurs réservoirs 10 par forage (puits 11) puis convoyé via des lignes d'écoulement 12 vers des "risers" ("tour riser" 13, "Riser catenaire" 14) pour y être remonté vers la surface. Ce fluide est alors pré-traité dans une station de collecte 15 avant d'être renvoyé via une ligne d'export 16 vers une base de chargement 17 pour pétrolier 18.

Lors d'une exploitation en grands fonds, les pressions de fluide sont inférieures à la pression externe exercée par l'eau sur le tube.

Le coût élevé de telles installations, ainsi que celui de leur fonctionnement et de leur maintenance incite les exploitants pétroliers à anticiper leurs modes de dégradation et les causes de rupture d'alimentation en fluide pétrolier dans le but de garantir un état opérationnel de toute la chaîne de production.

En particulier, les exploitants pétroliers doivent anticiper la formation de bouchons d'hydrate susceptibles d'apparaître dans des conditions thermodynamiques bien précises, fonction de la température et de la pression interne du fluide. De tels bouchons, lorsqu'ils sont formés, peuvent conduire à une obstruction de conduite et induire des coûts importants. Il est donc nécessaire de surveiller la pression interne et la température du fluide afin de prévenir l'apparition de tels bouchons.

Par ailleurs, le besoin en instrumentation ne s'exprime pas seulement au travers du maintien de la veine fluide, en contrôlant ainsi la température en des points critiques répartis le long de l'écoulement, mais également au niveau du suivi des efforts (contrôle de la fatigue) et de l'optimisation du régime de production. Une telle obligation nécessite une détection de toute variation soudaine de pression.

La vitesse de déplacement d'un bouchon d'hydrate peut être estimée en mesurant le temps que met un front de surpression correspondant pour se propager d'un point de mesure à un autre situé à proximité (par exemple quelques mètres plus loin).

Les tubes utilisés pour la réalisation des conduites présentent un diamètre typique de 12 pouces (environ 30 cm) et une épaisseur de paroi de 3/4 de pouce (environ 19 mm). Ils forment des tronçons de 12 m à 48 m de long. Ces tubes sont calorifugés afin de réduire au maximum les pertes thermiques par conduction avec l'extérieur (eau à environ 4˚C) et maintenir ainsi le fluide à une température suffisamment élevée pour prévenir la formation de bouchons d'hydrate.

Les exploitants pétroliers sont donc motivés par tout développement d'une instrumentation novatrice, de fiabilité accrue, de mise en oeuvre aisée qui présente un coût optimisé, qui leur permette de contrôler les phénomènes majeurs intervenant dans les grands fonds et donc, in fine, d'optimiser leurs moyens de production et leur productivité.

Le problème que se propose de résoudre l'invention concerne donc la mise au point d'un système complet de mesure de température, de pression et de variation de pression interne du fluide circulant à l'intérieur d'une conduite de transport ainsi que son suivi en fatigue (traction et flexion) dans un environnement "offshore" déporté (plusieurs kilomètres) sous haute température (parfois plus de 120˚C) et haute pression (plusieurs centaines de bar).

Les solutions de l'art connu employant des capteurs électriques (accéléromètres, jauges électriques de déformations, thermocouples) ne sont pas considérées comme fiables comme outils de mesure permanents pour des températures excédant 120˚C. Leurs durées de vie sont trop courtes (les exploitants demandent actuellement une durée de fonctionnement garantie sur 20 ans). De plus, le coût de remplacement de tels capteurs électriques est élevé, car un arrêt de production peut-être rendu nécessaire dans le cas de l'obstruction d'une conduite par un bouchon d'hydrate. Enfin, de tels capteurs électriques nécessitent une alimentation déportée ainsi qu'une conversion électronique locale permettant un transfert du signal sur une longue distance. Les systèmes de mesures mis en place aujourd'hui nécessitent, de par leur diversité, des réseaux associés différents pour transporter les informations correspondantes (la récupération des informations se fait par ROV ("Remote Operating Vehicle") ou par ombilicaux dédiés), ce qui complique considérablement le câblage, le traitement et l'archivage des données et interdit un fonctionnement en temps réel.

Les exploitants pétroliers souhaitent disposer d'une instrumentation tolérante au procédé d'assemblage et aux conditions d'emploi "off-shore", permettant de réaliser des mesures à distance (déport multi-kilométriques) de la distribution de température et des déformations axiales (efforts de traction et de flexion) et transverses (pressions) des tubes utilisés. Les capteurs doivent donc être passifs (sans alimentation électrique déportée) et reliés à la surface par un câble unique pouvant contenir plusieurs fibres optiques. Une telle instrumentation doit être apte à fournir en temps réel les informations nécessaires au maintien de la veine fluide (température, pression interne et variation de pression du fluide) et à garantir l'état opérationnel des installations (mesure de la déformation axiale et de la flexion, orientation et amplitude du moment de flexion).

Plusieurs solutions technologiques utilisant des capteurs optiques permettent de résoudre un tel problème de mesure de température, de pression, et de variation de pression interne circulant à l'intérieur d'une conduite, ainsi que son suivi en fatigue. Ces solutions peuvent être des systèmes de mesure répartie, c'est-à-dire de mesure continue le long d'une fibre optique (DTS ("Distributed Tempe rature Sensor")-Raman et Brillouin-OTDR ("Optical Time Domain Reflectometry"), ou des systèmes de mesure discrète ou ponctuelle (capteurs interférométriques et capteurs à réseaux de Bragg).

1. Systèmes de Mesure répartie

Le système DTS-Raman ne répond que partiellement au problème posé puisqu'il ne mesure strictement que la température. Un tel système doit donc être accompagné d'un ou plusieurs autres systèmes de mesure de déformation, ce qui augmente le coût du système global et complexifie le traitement de données. Par contre, les systèmes Brillouin-OTDR permettent de répondre intégralement au cahier des charges d'une mesure en milieu pétrolier car ils donnent potentiellement accès à des mesures réparties de température et de déformation le long d'une fibre. Toutefois, de tels systèmes sont peu nombreux et très chers, et ne permettent de réaliser que des mesures statiques (temps de réponse évoluant de quelques minutes à quelques heures). Ils ne permettent donc pas de détecter des variations de pressions subites sur quelques dixièmes de seconde.

2. Systèmes de mesure discrète

Outre des capteurs interférométriques en lumière blanche ou cohérente les capteurs les plus utilisés dans le secteur pétrolier sont les capteurs à réseaux de Bragg.

Un réseau de Bragg consiste, en effet, en une perturbation périodique de l'indice de réfraction dans un guide optique, par exemple une fibre optique. Il se comporte comme un miroir spectralement sélectif. Ainsi, lorsqu'un signal optique à large bande spectrale est injecté dans une fibre optique au sein de laquelle a été photo-inscrit un réseau de Bragg, seule une fine raie spectrale (environ 200 pm de large) extraite du signal incident est réfléchie tandis que le reste du signal est transmis sans altération. Les télécommunications optiques utilisent prioritairement les longueurs d'ondes proches de 1,55 $\mu$m (bande C) et la plupart des composants optiques (passifs et actifs) ont été développés pour ce domaine de longueur d'onde.

Le document référencé [2] décrit ainsi des transducteurs à réseaux de Bragg disposés le long de rainures ménagées dans des renforts d'acier d'annulaires d'un "câble riser". Ces transducteurs sont sensibles à la pression interne, aux déformations axiales, et à la flexion d'un tel câble. Afin de séparer ces contributions, deux réseaux sont fixés de façon diamétralement opposée sur chaque renfort. Ce principe convient pour des tubes de tours ("risers") avec armatures métalliques mais ne convient absolument pas pour les tubes métalliques.

L'invention a pour objet de résoudre les problèmes évoqués précédemment, et ce d'une façon globale, en proposant un dispositif tubulaire instrumenté qui permette de mesurer tous les paramètres utiles à l'exploitant, à savoir la pression interne statique de fluide, sa température, la surpression interne de fluide, le débit de fluide, le chargement longitudinal du tube, le moment de flexion et l'orientation en présentant une architecture optimisée, c'est-à-dire un nombre minimal d'emplacements et de capteurs.

**EXPOSÉ DE L'INVENTION**

L'invention concerne un dispositif tubulaire instrumenté pour le transport d'un fluide sous pression comprenant un tube dans lequel circule ce fluide auquel sont associés des moyens de mesure des déformations principales de ce tube, et des moyens de mesure de la température du fluide dans le tube, caractérisé en ce que ce tube est équipé de ces moyens de mesure solidaires de sa surface et déportés par au moins un câble optique de déport vers un système de mesure optoélectronique, en ce que ces moyens de mesure sont des moyens d'assemblage d'au moins deux fibres optiques non parallèles, qui comprennent au moins trois ensembles d'au moins deux jauges optiques à réseaux de Bragg, ces au moins trois ensembles étant fixés en au moins trois emplacements de mesure répartis le long du tube, reliés entre eux et reliés au câble optique de déport par des fibres optiques, et en ce que au moins un ensemble comprend, en outre, une jauge de température.

Ces moyens de mesure peuvent être préassemblés sur un support ou fixés directement sur le câble de déport.

Ces moyens de mesure peuvent être assemblés pour former au moins une rosette. Avantageusement chaque rosette forme un capteur flexible à deux dimensions, formée par exemple de feuilles de polyimide assemblées.

Avantageusement chaque ensemble comprend trois jauges de mesure des déformations du tube.

Chaque capteur comprend une partie de mesure des déformations et une partie de mesure de la température. La partie de mesure des déformations peut être constituée d'une fibre optique monomode, sur laquelle ont été photo-inscrits des réseaux de Bragg, enroulée et maintenue collée entre deux feuilles par exemple de polyimide ou de « Kapton », les entrées-sorties de fibre étant protégées par des capillaires par exemple de plastique, les parties de fibre comportant les réseaux de Bragg étant découvertes. La partie de mesure de la température peut comprendre un réseau de Bragg collé sur une plaquette métallique. Avantageusement la plaquette métallique est de même nature que le métal du tube.

Dans un premier mode de réalisation le dispositif de l'invention comprend au moins trois boîtiers de mesure, dans lesquels sont disposés respectivement trois capteurs, isolés de la pression hydrostatique externe reliés par des raccords tubulaires. Le boîtier central de chaque ensemble est relié à l'instrumentation de mesure par un câble optique de déport. Les boîtiers et les raccords sont soudés entre eux pour former un ensemble rigide. Le câble de déport est constitué d'un tube d'acier inoxydable rempli de gel et contenant plusieurs fibres optique monomodes, d'une armure en fils d'acier séparés par des gaines de plastique. Le boîtier central incorpore une embase destinée à effectuer le raccord de connexion du câble optique de déport.

Dans un second mode de réalisation, le dispositif de l'invention comprend au moins trois capteurs recouverts d'un revêtement de protection. Ce revêtement peut être un revêtement polymère d'épaisseur comprise entre 3 et 4 centimètres. Une boîte de dérivation effectue la liaison entre les capteurs de chaque ensemble et un câble optique principal relié à l'instrumentation de mesure. La reprise d'effort sur le câble principal est effectuée par cerclage de ce câble le long du tube. Le câble de déport est inclus dans le revêtement de protection.

Le dispositif de l'invention peut être utilisé dans le domaine de la prospection pétrolière "off-shore", et dans le domaine du transport de gaz ou d'hydrocarbures.

Le dispositif de l'invention bénéficie des avantages d'une métrologie par réseaux de Bragg, c'est-à-dire :

- pas d'interférences électromagnétiques (mesure optique),
- multiplexage et lecture en longueur d'onde (signature spectrale indépendante des fluctuations de puissance optiques),
- mesures ponctuelles,
- déport important de la mesure (portées kilométriques) et flexibilité de câblage,
- stabilité dans le temps et durabilité en environnements sévères,
- mesures sur une gamme de températures usuelle (-20˚C, +90˚C),
- non nécessité d'une connexion permanente (instrumentation connectable et déconnectable à volonté) du fait de la mesure absolue des longueurs d'onde,
- très faibles pertes d'insertion autorisant une mise en série des capteurs le long d'une seule ligne de mesure,
- optimisation du coût du point de mesure en vertu du multiplexage par une seule unité d'acquisition commune à tous les capteurs,
- mesures multi-paramètres (température, déformations) uniformisées dans une seule unité d'acquisition et un seul protocole de traitement et d'affichage (cohérence dans l'analyse et le stockage des données).

Les différents domaines concernés par le dispositif de l'invention sont les industries pétrolière et gazière et en général toutes les industries nécessitant un transport de fluide par tubes ou "pipelines" sur de longues distances dans des conditions d'opération terrestres ou en eau profonde ("deep off-shore").

En prospection pétrolière, l'invention trouve une application immédiate dans la surveillance de la fatigue mécanique induite par le chargement et par l'activité marine sur les lignes d'export ("export lines") et les "risers" ("riser tower", "catenary risers"), notamment à proximité des bouées de chargement et du point de contact avec le sol ("Touch Down Point").

Une autre application importante de l'invention concerne le contrôle de production à travers le suivi de la veine fluide en s'assurant que les conditions de pression et de température sont normales afin de prévenir toute apparition d'un bouchon dans la conduite ainsi que des phénomènes de perturbation d'écoulement ("slugging") pouvant conduire à une interruption de la production. La répartition des emplacements de mesure le long du tube est originale en ce sens qu'elle permet de déterminer l'amplitude de flexion et son orientation et d'établir simultanément avec le même schéma l'autocorrélation temporelle des surpressions afin d'en déduire le débit de fluide. Ceci constitue un progrès notable car les dispositifs de l'art connu mettent en oeuvre des solutions séparées, voire fondées sur des principes ou des techno-

EP 1 706 714 B1

logies différentes, pour parvenir aux mêmes objectifs. L'invention permet d'obtenir toutes les informations recherchées (température, chargement axial, flexion et orientation, pression et surpression interne, débit de fluide) avec un nombre et un placement optimisés de capteurs.

L'invention trouve également une application immédiate dans les réseaux de transports terrestres de gaz et d'hydrocarbures. Certains réseaux (par exemple en Alaska ou en zones arctiques ou subarctiques) ne sont pas surveillés et peuvent se rompre ou se fissurer à cause de phénomènes de corrosion et de fatigue thermomécanique (par exemple, les tubes posés sur le permafrost).

**BRÈVE DESCRIPTION DES DESSINS**

La figure 1 illustre un schéma type d'une exploitation pétrolière sous-marine.

Les figures 2A et 2B illustrent une portion instrumentée, après élimination de la zone calorifugée, du dispositif de l'invention dans une vue de côté et dans une vue en coupe.

Les figures 3A, 3B et 3C illustrent des moyens de mesure du dispositif de l'invention, qui sont de moyens d'assemblage d'au moins deux fibres optiques non parallèles ; la figure 3A illustrant un exemple de rosette à réseaux de Bragg de type "Delta", et les figures 3B et 3C deux variantes de réalisation.

Les figures 4A et 4B illustrent la constitution de rosettes utilisées pour l'instrumentation du dispositif de l'invention dans une vue de dessus et dans une vue en coupe A-A.

Les figures 5A et 5B illustrent le boîtier principal et la connexion de celui-ci avec le câble de déport dans un premier mode de réalisation du dispositif de l'invention, dans une vue en coupe transversale et dans une vue en coupe B-B.

Les figures 6A et 6B illustrent le raccordement entre le câble de déport et un capteur selon un second mode de réalisation du dispositif de l'invention, dans une vue en coupe transversale et dans une vue en coupe longitudinale.

**EXPOSÉ DÉTAILLÉ DE MODES DE RÉALISATION PARTICULIERS**

Le dispositif tubulaire instrumenté (ou "smart pipeline") de l'invention est un tube traditionnel, partiellement découvert puis recouvert par son calorifuge, équipé d'un ensemble de jauges optiques pré-positionnées puis collées sur sa surface et déportées par un ou plusieurs câbles optiques sous-marins vers un système de mesure optoélectronique. Ce système de mesure peut être placé en surface, sur terre ou sur mer.

Cet ensemble de jauges comprend des rosettes, qui sont des assemblages de plusieurs jauges permettant de déterminer les déformations selon différentes orientations du support, ici un tube, sur lequel elles sont fixées suivant plusieurs directions, comme décrit dans le document référencé [3]. Ce document décrit, en effet, un micro-système optique de type rosette plane de jauges de contrainte à guides diélectriques, destiné à mesurer un système de contraintes appliqué à une pièce, dans lequel, la pièce étant une pièce à contrainte purement longitudinale, au moins une rosette est formée d'au moins deux jauges de contraintes à guides diélectriques, et dans lequel un circuit de calcul permet de déterminer ladite contrainte par résolution d'un système d'équations.

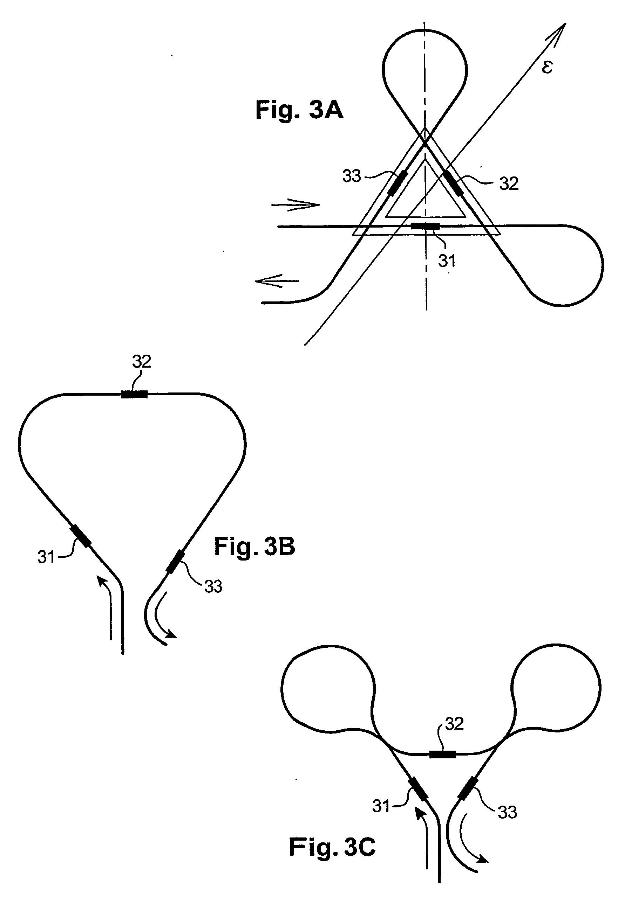

Dans la suite de la description les assemblages de jauges considérés à titre d'exemple sont des rosettes, comme illustré sur la figure 3A. Mais les moyens de mesure du dispositif tubulaire instrumenté de l'invention sont plus généralement des moyens d'assemblage d'au moins deux fibres optiques non parallèles, comme illustré sur les figures 3A, 3B et 3C, qui peuvent être préassemblés sur un support ou fixés directement sur le câble de déport.

Dans le dispositif de l'invention chaque rosette peut être réalisée sous la forme d'un capteur flexible à deux dimensions formé, par exemple, de feuilles de polyimide assemblées. Ce capteur comprend trois jauges de mesure de déformation qui permettent de déterminer les deux déformations principales (transverse et axiale) indépendamment du positionnement angulaire de la rosette sur le tube, de manière à fixer, par exemple coller, ce capteur sur ce tube sans précaution particulière, dans un environnement industriel non maîtrisé (fabrication des tubes). Ce capteur peut comprendre deux jauges seulement mais orientées précisément l'une le long de l'axe, l'autre transversalement. Par ailleurs, une jauge de température peut être également insérée dans ce capteur afin de mesurer sa température au plus près des jauges de déformation, et de permettre de séparer les contributions thermiques des contributions purement mécaniques (déformations transverse et axiale). Dans la suite de la description le terme "capteur" fait référence à un tel capteur de type rosette.

Le dispositif de l'invention est équipé d'au moins trois emplacements de mesure, protégeant les capteurs des chocs externes, reliés entre eux et reliés à un câble de déport (vers la surface) par des fibres optiques. Ces emplacements sont disposés en différentes positions selon l'axe du tube et orientées selon plusieurs angles de sa section (avantageusement tous les 60˚).

Dans un exemple de réalisation, le dispositif de l'invention comprend un tube de 24 mètres de long et de 12 pouces (30 centimètres) de diamètre environ équipé d'emplacements de mesure répartis. Tous les emplacements abritent un capteur. De façon avantageuse, l'emplacement central comporte une rosette B2 à quatre jauges (trois jauges de déformation et une jauge de mesure de température) tandis que les deux emplacements latéraux comportent chacun une rosette B1 ou B3 à trois jauges de déformation. La mesure de température, qui est considérée homogène sur l'ensemble de la zone de mesure, peut être uniquement assurée par la rosette centrale B2. Le dispositif, dans cette portion instrumentée, comprend donc au moins 10 jauges. Dans le cas où la température ne serait pas homogène de façon circonférentielle, chaque rosette peut contenir trois jauges de déformation et une jauge de température, ce qui conduit à 12 jauges dans cette portion instrumentée.

Le dispositif de l'invention est destiné à être insérable directement sur site de production pétrolière sans intervention spécialisée. Il peut fournir de manière déportée, via une ou des fibres optiques, les mesures suivantes:

- la température interne du fluide circulant dans le tube,
- la pression et la variation interne de pression du fluide,
- le chargement axial,
- le rayon de courbure de flexion du tube,
- l'orientation de cette flexion par rapport à sa section.

Il permet en outre d'effectuer une débitmétrie par analyse dynamique des ondes de pression.

Le dispositif de l'invention comprend deux modes de réalisation selon que les emplacements sont ou non isolés de la pression hydrostatique externe (profondeur d'eau). Dans un premier mode de réalisation, trois boîtiers de mesure isolés de la pression hydrostatique externe, et reliés par des raccords tubulaires sont disposés en ces emplacements de mesure. Dans un second mode de réalisation, trois capteurs recouverts d'un revêtement polymère de 3 à 4 centimètres d'épaisseur les protégeant du milieu marin, des chocs et des frottements sont disposés en ces emplacements de mesure.

Premier mode de réalisation de l'invention

Dans ce premier mode de réalisation les trois emplacements 22 sont occupés par des boîtiers, dans lesquels sont disposés respectivement trois capteurs, isolés de la pression hydrostatique externe. Chaque portion instrumentée du dispositif de l'invention, illustrée sur la figure 2 après élimination du calorifuge 21, comprend un ensemble pré-assemblé constitué d'au moins un boîtier central $B_2$ et de deux boîtiers latéraux $B_1$ et $B_3$, de raccords tubulaires préformés 24 (au diamètre du tube) reliant les boîtiers entre eux et d'une fibre optique de déport 23 reliant le boîtier central $B_2$ à l'instrumentation de mesure située en surface. Les boîtiers sont installés le long de l'axe du tube (par exemple tous les décimètres) et selon différentes orientations angulaires. Dans le câble de déport vers l'instrumentation en surface, à une fibre optique correspond donc un ensemble de trois boîtiers.

La figure 2B montre une répartition des boîtiers à 60˚ (θ1 = θ2 = 60˚), à titre d'exemple. Mais d'autres configurations angulaires sont possibles. De même, la répartition et le mode d'interconnexion des boîtiers peut être différente. Le câble de déport 23 peut être connecté au boîtier $B_3$ ou au boîtier $B_1$ par exemple. Ces boîtiers $B_1$, $B_2$ et $B_3$, de dimensions typiques (hauteur x longueur x largeur=4 cm x 20 cm x 10 cm) servent à pré-positionner les capteurs pour faciliter leur mise en place chez le fabricant de tube et introduction d'un polymère d'étanchéité. Ils ont aussi une fonction mécanique de reprise d'effort.

La procédure de montage du dispositif de l'invention comporte alors les étapes suivantes :

- préparation d'un ensemble pré-assemblé boîtiers +raccords,
- adaptation de cet ensemble sur le tube, par soudage,
- assemblage des composants optiques sur le tube 20 (chez le fabricant de tube) avec recouvrement par le calorifuge 21,
- étalonnage en température, chargement et flexion avant transport et installation sur site de production.

Second mode de réalisation de l'invention

Dans ce second mode de réalisation, le dispositif de l'invention est instrumenté par des capteurs situés en des emplacements similaires à ceux du premier mode de réalisation. Les capteurs sont, cette fois, collés directement sur le tube sans boîtiers de protection contre la pression hydrostatique externe. Les capteurs d'une même portion instrumentée du dispositif de l'invention, ou "double-joint", sont connectés entre eux par un câble optique de déport, qui est connecté à un câble optique principal au niveau d'une boîte de dérivation, positionnée en tête de portion instrumentée. Les capteurs, et le câble optique de déport sont noyés dans un revêtement qui les rend hermétiques au milieu extérieur. Le câble optique principal relie la boîte de dérivation et l'instrumentation située en surface. Cette boîte de dérivation permet de garantir l'étanchéité des câbles optiques principal et de déport. La distribution des fibres optiques le long du tube en de multiples portions instrumentées est prévue en phase d'industrialisation.

La procédure de montage du dispositif de l'invention comprend alors la préparation des composants de mesure. Une fois ces composants mis en place, un revêtement est rapporté sur toute la partie découverte afin de protéger ces composants, ainsi que les connexions de câbles optiques. Le calorifuge est alors rapporté sur ce revêtement afin d'isoler l'ensemble des chocs extérieurs et assurer sa protection thermique. La reprise d'effort sur le câble optique principal est effectuée par cerclage de celui-ci le long du tube.

On va, à présent, considérer plus en détail les étapes de la procédure de montage du dispositif de l'invention, dans ces deux modes de réalisation.

## 1. Préparation des composants de mesure

### A. Réalisation des rosettes à réseaux de Bragg

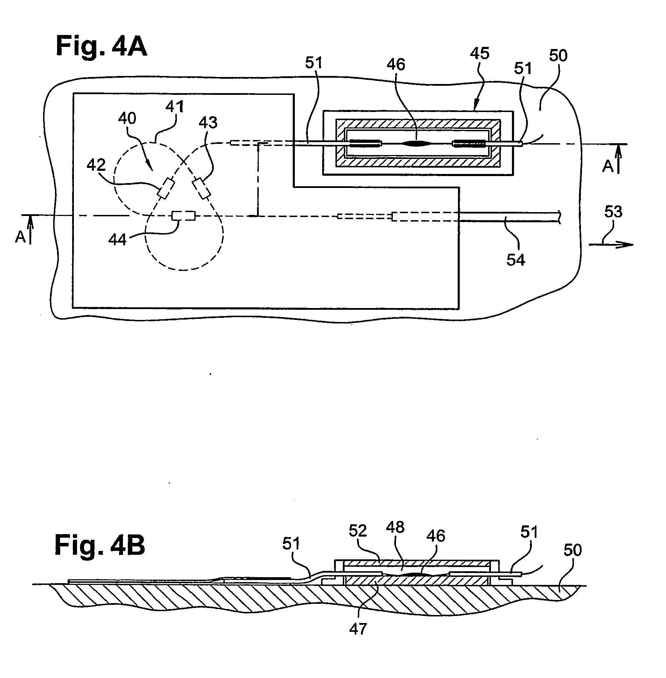

Comme illustré sur les figures 4A et 4B, on utilise un capteur, qui comporte une première partie de mesure des déformations 40 constitué d'un enroulement de fibre monomode 41 (formant un triangle équilatéral) sur laquelle ont été photo-inscrits des réseaux de Bragg 42,43 et 44 par des techniques connues (masque de phase et laser UV) en des positions bien déterminées le long de celle-ci. Cette fibre 41 est maintenue enroulée par collage entre deux feuilles par exemple de polyimide ou encore de « Kapton ».

Les configurations les plus utilisées de ces rosettes sont en effet les rosettes « delta » constituées de trois réseaux 31, 32 et 33 ou 42, 43 et 44 disposés à 120˚ (ou 60˚) les uns par rapport aux autres, comme illustré sur les figures 3A et 4A, et les rosettes "rectangulaires" faisant intervenir un angle de 45˚.

Les parties de la fibre 41 comportant les réseaux de Bragg 42, 43, 44 sont découvertes pour permettre un collage direct fibre-structure (sans interface « Kapton »).

Ce capteur comporte également une seconde partie de mesure de température 45 qui comprend un réseau 46 collé sur une plaquette métallique 47, par exemple en acier de même constitution que l'acier ayant servi à construire le tube (par exemple des aciers X52 de coefficient de dilatation thermique $K \sim 11.10^{-6}$ $K^{-1}$).

La plaquette métallique 47 est maintenue en contact thermique avec la surface du tube 50 afin de garantir que la partie de mesure de la température 45 est à la même température que la partie de mesure des déformations 40. Un procédé d'auto-compensation permet de supprimer l'effet induit par la température sur le capteur lui-même.

Pour éviter une rupture de la fibre 41 par cisaillement, les entrées-sorties de celle-ci sont protégées grâce à des capillaires de plastique 51 (d'environ 900 pm de diamètre) enfilés sur celle-ci et scellés dans le capteur.

Les références 52, 53 et 54 représentent respectivement un couvercle de protection 52, l'axe du tube 50, et le câble optique de déport 54.

### B. Réalisation d'un ensemble préassemblé boîtier+raccords (dans le premier mode de réalisation)

Les raccords tubulaires (par exemple en acier inox, de diamètre environ 5 mm à 6 mm) sont découpés à des longueurs déterminées en fonction du diamètre de tube 60. A titre d'exemple, pour un tube de diamètre 30 cm (12 pouces), la longueur d'un raccord est d'environ 10 cm. Chaque raccord est soudé entre deux boîtiers de sorte que l'ensemble soit mécaniquement rigide.

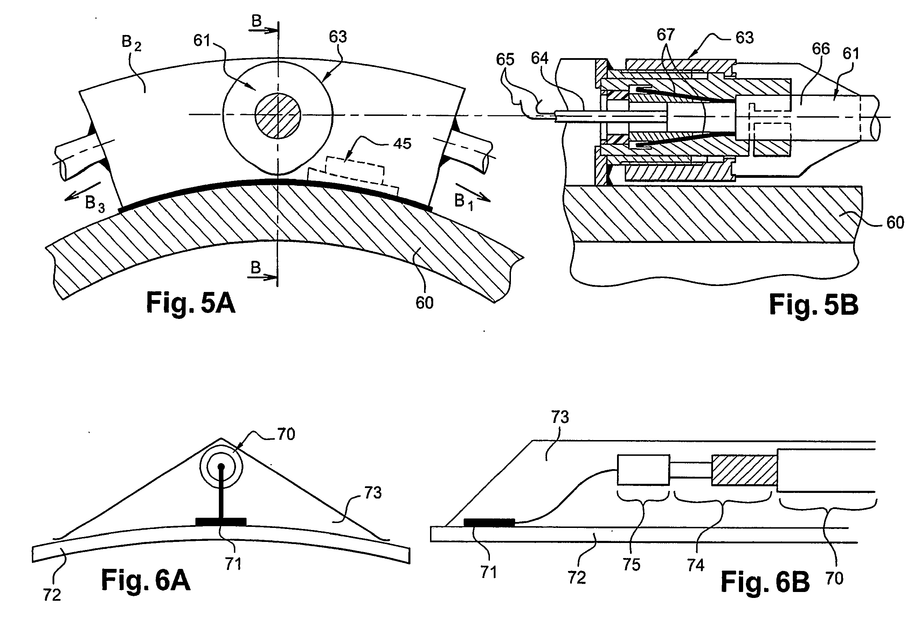

A la différence des boîtiers B1 et B3, le boîtier principal B2 a pour fonction supplémentaire d'assurer la reprise d'effort du câble de déport 61. Pour cela, il incorpore une embase 63 destinée à effectuer le raccord de connexion du câble optique de déport 61, comme illustré sur les figures 5A et 5B.

Pour éviter la corrosion des aciers (câble, connecteurs, boîtiers), une protection par électrode consommable (en zinc, par exemple) est prévue pour l'intégralité des pièces métalliques du dispositif de l'invention.

### C. Préparation du câble optique de déport

Le câble optique de déport 61 est constitué d'un tube d'acier inoxydable 64 (diamètre typique égal à environ 2,8 mm) rempli de gel et pouvant contenir une douzaine de fibres optiques monomodes 65, d'une armature en fils 67 d'acier galvanisé (de diamètre typique égal à environ 1 mm), séparés par des gaines plastiques.

Dans le premier mode de réalisation, le câble 61 peut être raccordé au boîtier central $B_2$ par un montage dédié tel que celui représenté sur les figures 5A et 5B, qui est classique pour un homme de l'art.

Les fibres sont, tout d'abord, sorties de ce câble 61 sur une longueur de 50 cm environ afin de les engager dans les raccords tubulaires 64 et de permettre des opérations de soudure optique, (dans le second mode de réalisation, les fibres sont engagées alors dans des guides polymères).

Les fils d'acier 67 servant d'armatures sont alors épanouis et serrés mécaniquement dans un montage en cône afin d'assurer la reprise d'effort. La gaine 66 du câble optique 61 est ensuite serrée mécaniquement pour empêcher ce câble de glisser.

Un polymère est, ensuite, collé sur le câble 61 pour le solidariser avec l'extrémité de ce montage pour former un raccord qui limite la fatigue mécanique du câble en l'empêchant de travailler en flexion lors des opérations de pose.

Dans le second mode de réalisation, la connexion entre les capteurs est faite par un câble de déport inclus dans le revêtement protecteur des capteurs. Ce câble connecte tous les capteurs d'une portion instrumentée. La reprise d'effort et l'étanchéité de ce câble est assurée par une boîte de dérivation située en sommet de portion instrumentée. Cette boîte de dérivation peut également être chargée de redistribuer les fibres optiques du câble principal aux câbles de déport le long des différentes portions instrumentées. La reprise d'effort du câble principal est effectuée par cerclage le long du tube. Comme illustré sur les figures 6A et 6B, la reprise d'effort d'un câble de déport 70 est faite par collage de celui-ci dans le revêtement 73 des capteurs 71 à la surface du tube 72. Sur la figure 6B sont également représentées une protection fibre 74 et une épissure 75.

## 2. Adaptation de ces composants sur le tube

Si le tube est déjà calorifugé, celui-ci doit être décalorifugé localement sur les trois emplacements à instrumenter ainsi que sur les passages du cordon. Cette opération peut s'effectuer par tournage sur une longueur de l'ordre de 1 à 2 mètres, ou par fraisage local pour ne dégager que les zones utiles. La surface de métal ainsi dégagée est ensuite avantageusement rectifiée pour éliminer tout défaut et toute oxydation superficielle.

Dans le premier mode de réalisation, l'ensemble pré-assemblé formé par trois boîtiers et les raccords tubulaires est appliqué sur les zones découvertes et les trois boîtiers sont soudés par points sur le tube pour assurer la stabilité mécanique de l'ensemble et permettre la reprise d'effort du câble de déport, comme illustré sur les figures 5A et 5B. Le boîtier principal présente une épaisseur typique de l'ordre de 40mm. La rigidité des boîtiers rapportés est négligeable devant la rigidité du tube. Le comportement thermomécanique de ce tube ne se trouve donc pas modifié par la fixation de cet ensemble.

Dans le second mode de réalisation, les capteurs sont collés sur le tube ainsi que les fibres de déport qui sont protégées par des capillaires en polymère. La fibre de déport et les capteurs sont entièrement noyés dans un revêtement protecteur. Le câble de déport est relié à une boîte de dérivation permettant la connexion de ce câble de déport au câble optique principal. Le câble optique principal est maintenu sur le tube par cerclage afin d'assurer la reprise d'effort nécessaire.

## 3. Assemblage du tube instrumenté

Le câble de déport est, tout d'abord, raccordé sur le boîtier principal comme illustré sur les figures 5A et 5B. Les fibres sont ensuite réparties vers leurs différents emplacements. Les rosettes sont alors soudées aux fibres et l'excédent de fibre (ainsi que le manchon de protection de soudure) est enroulé et collé à l'intérieur des boîtiers dans le premier mode de réalisation ou noyés dans le revêtement dans le second mode de réalisation. Les rosettes peuvent être collées sur la surface du tube à l'aide d'une colle époxy avec emploi d'une ceinture chauffante de très forte puissance thermique (typiquement 100 kW/m$^2$). Un couvercle rainuré 52, laissant entrer et sortir la fibre, est soudé ou collé sur la surface du tube, en recouvrant la plaquette d'acier 47 de la figure 4. Un polymère de remplissage, avantageusement en silicone, est injecté à l'intérieur 48 de ce couvercle.

Le silicone présente le double avantage de résister à des températures élevées (supérieure à 150°C) et d'absorber les vibrations sans transmettre les efforts mécaniques qui lui sont appliqués.

La plaquette d'acier 47 portant le réseau de température est ainsi maintenue tout en restant libre de se dilater.

La protection métallique du capteur de température est alors enrobée dans une colle de type époxy (chargée à l'inox par exemple) afin de garantir une étanchéité à la pression.

Dans le premier mode de réalisation, Les intérieurs des boîtiers sont ensuite remplis par un polymère d'enrobage rigide (résine époxy chargée inox par exemple). La partie supérieure de ces boîtiers est recouverte par ce polymère en réalisant l'étanchéité de l'ensemble de chaque boîtier ainsi que l'étanchéité intérieure avec les raccords et le câble. Les parties optiques ne sont alors pas sensibles à la pression hydrostatique externe mais seulement à la température et aux déformations. Le calorifuge est ensuite ré-injecté par-dessus les boîtiers et les raccords afin de rétablir la protection thermique.

Dans le second mode de réalisation, le revêtement recouvre le capteur et le câble optique de déport. Le calorifuge est ensuite ré-injecté sur ce revêtement. La partie optique de mesure de déformation est alors sensible aux déformations du tube et à la pression hydrostatique externe.

## 4. Etalonnage

Les systèmes d'acquisition optoélectronique permettant de mesurer les longueurs d'onde de Bragg des capteurs optiques à réseaux de Bragg sont connus.

A titre d'exemple, un premier système utilise une source optique à spectre large qui illumine tous les réseaux de Bragg présents sur la ligne de mesure et une cavité interférométrique accordable (Fabry-Perot) qui permet de mesurer leurs spectres respectifs. Le calibrage en longueur d'onde est obtenu grâce à des réseaux de référence stabilisés (mécaniquement et en température) ce qui permet d'obtenir une mesure de longueur d'onde absolue.

Un second système utilise également une source optique à spectre large, mais avec un filtre linéaire comme élément discriminateur en longueur d'onde. La mesure du ratio de transmission au travers de ce filtre spectral calibré fournit l'information en longueur d'onde recherchée.

Ces systèmes présentent un temps de réponse compatible avec la détection d'un front de pression (inférieur à 0,1 s) dans le tube afin de permettre des mesures du débit de fluide.

Un test fonctionnel du tube instrumenté peut être réalisé afin de s'assurer que les parties optiques sont opérationnelles (bilan de liaison) et pour calibrer la réponse du tube en fonction du chargement. Il nécessite de placer la portion de tube instrumentée sur une machine d'essai mécanique telle que décrite dans le document référencé [4]. Cette machine permet d'exercer une contrainte de chargement (entraînant une déformation axiale) et des contraintes de flexion. La mesure de l'orientation de la flexion peut être testée en positionnant le tube en différentes positions angulaires par rapport au bâti de mesure.

Une fois les différentes étapes de montage du dispositif de l'invention exécutées, on peut alors effectuer les mesures et exploiter les résultats obtenus de la manière suivante.

## 1. Mesure des déformations principales

Chaque tube comporte au moins trois emplacements incluant chacun un capteur de type rosette à trois ou quatre jauges (trois jauges de mesure de déformation et éventuellement une jauge de mesure de température).

Un procédé de mesure des déformations principales à partir des déformations mesurées par chacune des jauges constituant une rosette est décrit dans le document référencé [3].

Une première jauge peut être collée approximativement selon l'axe du tube. En situation industrielle, les conditions de collage étant rarement bien contrôlées, il subsiste souvent une petite erreur de positionnement due en particulier au glissement lors du collage à haute température (lorsque la colle époxy devient très fluide). Il subsiste alors généralement un certain angle entre l'axe z du tube et la position finale du capteur après collage. Soit $\alpha$ cet angle entre la direction principale orientée selon l'axe du tube et cette première jauge.

Les déformations principales sont déterminées, indépendamment de cet angle $\alpha$, en résolvant le système d'équations suivant:

$$\begin{cases} \varepsilon_t = \dfrac{d+r}{2} \\ \varepsilon_z = \dfrac{d-r}{2} \end{cases} \qquad (1)$$

Les paramètres d et r, appelés respectivement "partie sphérique" et "déviateur", sont donnés dans le tableau ci-dessous pour les deux configurations de rosettes les plus courantes (45° et 120°). Chaque emplacement de mesure fournit trois déformations $\varepsilon_a$, $\varepsilon_b$, $\varepsilon_c$. Pour chaque emplacement, on en déduit $\varepsilon_t$ et $\varepsilon_z$. Dans la suite, on appelle $\varepsilon_1 = \varepsilon_{z1}$, $\varepsilon_2 = \varepsilon_{z2}$ et $\varepsilon_3 = \varepsilon_{z3}$ les trois composantes de déformations axiales.

| Type de rosette à trois jauges | Rosette à 120° | Rosette à 45° |
|---|---|---|
| Partie sphérique (d) | $3.d = \varepsilon_a + \varepsilon_b + \varepsilon_c$ | $2.d = \varepsilon_b + \varepsilon_c$ |
| Déviateur (r) | $3.r = \dfrac{\varepsilon_b + \varepsilon_c - 2.\varepsilon_a}{\cos(2.\alpha)}$ | $r = \dfrac{\varepsilon_b - \varepsilon_c}{2.\cos(2.\alpha)}$ |
| Inclinaison rosette-axe principal | $tg(2.\alpha) = \sqrt{3}.\dfrac{\varepsilon_b - \varepsilon_c}{2.\varepsilon_a - \varepsilon_b - \varepsilon_c}$ | $tg(2.\alpha) = \dfrac{d - \varepsilon_a}{\varepsilon_b - d} = \dfrac{\varepsilon_c + \varepsilon_b - 2.\varepsilon_a}{\varepsilon_b - \varepsilon_c}$ |

(suite)

| Fonction déviateur | $r_{120}=$ $\frac{1}{3}.(\varepsilon_a - \varepsilon_c)\sqrt{3 + \left(2.\frac{(\varepsilon_b - \varepsilon_c)}{\varepsilon_a - \varepsilon_c} - 1\right)^2}$ | $r_{45}=$ $\frac{1}{2}.(\varepsilon_b - \varepsilon_c).\sqrt{1 + \left[2.\frac{\varepsilon_a - \varepsilon_c)}{\varepsilon_b - \varepsilon_{c)}} - 1\right]^2}$ |
|---|---|---|

## 2. Calcul de la pression statique de fluide et de la déformation axiale à partir des déformations principales des différents capteurs

Les tubes utilisés en production pétrolière sont caractérisés par un faible rapport épaisseur-sur-rayon, de valeur typique minimale 1/20. Le chargement axial ou la flexion se manifeste principalement par une déformation axiale accompagnée d'une déformation transverse (loi de Poisson). De même, les variations de pressions interne et externe se manifestent principalement par une déformation transverse accompagnée d'une déformation axiale.

Soit $P_f$ la pression interne du fluide. Le différentiel de pression entre les parties interne et externe du tube est noté $P=P_f - P_e$. La déformation transverse induite par ce différentiel de pression P sur le tube aux extrémités encastrées s'écrit alors :

$$\varepsilon_t = \frac{P.R}{E.t}\left(\frac{2-v}{2}\right) = K.P \qquad (2)$$

où R est le rayon moyen du tube, t son épaisseur,
où E est le module d'Young de l'acier du tube (environ 193 GPa) et $v$ est son coefficient de poisson($v \sim 0{,}29$), cette loi étant donnée à titre indicatif.

En pratique, un étalonnage en pression est réalisé afin de déterminer la valeur expérimentale du coefficient K à prendre en compte.

Dans ce qui suit, on considère le premier mode de réalisation. Pour simplifier le calcul d'auto-compensation thermique, les déformations principales $\varepsilon_t$ et $\varepsilon_z$ sont converties en décalages de longueur d'onde $\Delta\lambda_t$ et $\Delta\lambda_z$ selon $\Delta\lambda_t$ = (1-pe). $\varepsilon_t.\lambda_t$ et $\Delta\lambda_z$ = (1-pe) .$\varepsilon_z.\lambda_z$. Ces décalages n'ont pas de réalité physique et servent de base de calcul. Le comportement thermomécanique d'un tube de faible épaisseur, encastré à ses extrémités, soumis simultanément à un différentiel de pression (interne-externe) P, à une déformation axiale $\varepsilon$ et à une variation de température $\Delta T$ (par rapport à une température de référence), se traduit par le système d'équations suivant:

$$\begin{cases} \Delta\lambda_t = (1 - p_e).\lambda_t.[K.P - v.\varepsilon] + \lambda_t.[(1 - p_e).\alpha + \xi]\Delta T \\ \Delta\lambda_z = (1 - p_e).\lambda_z.[K'.P + \varepsilon] + \lambda_z.[(1 - p_e).\alpha + \xi]\Delta T \end{cases} \qquad (3)$$

dans lequel on introduit le second paramètre

$$K' = K.\frac{(1 - 2v)}{(2 - v)} \qquad (4)$$

Une mesure supplémentaire de la température est obtenue par le réseau de mesure de température collé sur support acier (mode d'auto-compensation thermique). La longueur d'onde de ce réseau évolue selon la relation:

$$\Delta\lambda_T = \lambda_T.\big[(1-p_e).\alpha + \xi\big]\Delta T \qquad (5)$$

où $p_e$ est le coefficient photo-élastique de la silice (0,22), $\alpha$ est le coefficient de dilatation thermique de l'acier ($11.10^{-6}$/˚C pour de l'acier X52) et $\xi$ est le coefficient thermo-optique de la silice (environ $7.10^{-6}$/˚C). Une telle réalisation présente l'avantage d'une sensibilité en température supérieure (d'un facteur 2 environ) à celle d'un réseau de Bragg libre (non collé), ce qui permet d'améliorer la précision de mesure de température par rapport à la méthode de correction.

L'équation (3) montre que la pression et la déformation sont liées par un système matriciel (de matrice M) aux longueurs d'onde mesurées, selon la loi :

$$\begin{pmatrix} \Delta\lambda_1 - \dfrac{\lambda_1}{\lambda_T}.\Delta\lambda_T \\[2ex] \Delta\lambda_2 - \dfrac{\lambda_2}{\lambda_T}.\Delta\lambda_T \end{pmatrix} = \begin{bmatrix} M_{11} & M_{12} \\ M_{21} & M_{22} \end{bmatrix} . \begin{pmatrix} P \\ \varepsilon \end{pmatrix} \qquad (6)$$

La détermination des paramètres P et $\varepsilon$ nécessite ainsi d'inverser la relation (6).

Dans le cas de la méthode d'auto-compensation thermique, la longueur d'onde du réseau de mesure de température est prise comme nouvelle référence spectrale, la mesure de température étant elle-même référencée par rapport à un réseau de référence thermalisé placé dans l'unité d'acquisition située à la surface. En pratique, les termes $\dfrac{\lambda_1}{\lambda_T}$ et $\dfrac{\lambda_2}{\lambda_T}$ sont généralement très proches de 1 (à $\pm$ 2 %). On effectue alors le changement de variables suivant:

$$\begin{cases} \lambda_1' = \lambda_1 - \lambda_T \\ \lambda_2' = \lambda_2 - \lambda_T \end{cases} \qquad (7)$$

L'inversion de cette matrice 2x2 fournit la matrice expérimentale de calibrage Ci suivante:

$$\begin{pmatrix} P \\ \varepsilon \end{pmatrix} = \begin{bmatrix} C_{11} & C_{12} \\ C_{21} & C_{22} \end{bmatrix} . \begin{pmatrix} \Delta\lambda_1' \\ \Delta\lambda_2' \end{pmatrix} \qquad (8)$$

Pour laquelle les coefficients sont donnés par :

$$\begin{cases} C_{11} = \dfrac{E.t}{(1-p_e).\lambda_1.R(1-v^2)} \\[2ex] C_{12} = \dfrac{E.t.v}{(1-p_e).\lambda_2.R.(1-v^2)} \\[2ex] C_{21} = \dfrac{-(1-2.v)}{2.(1-p_e).\lambda_1.(1-v^2)} \\[2ex] C_{22} = \dfrac{(2-v)}{2.(1-p_e).\lambda_2.(1-v^2)} \end{cases} \qquad (9)$$

Chaque boîtier est caractérisé par sa matrice de calibrage. La résolution de ces systèmes permet d'obtenir les valeurs de différentiel de pression et de température de fluide, ainsi que les déformations axiales ε1, ε2, ε3, indépendamment de l'orientation des capteurs sur le tube. La profondeur h de l'eau étant connue, la pression externe s'en déduit selon la relation $P_e$ (bar) ~ 0,1. h (m). La pression interne du fluide $P_f$ est alors déduite selon la relation $P_f = P + P_e$.

Dans le second mode de réalisation, les capteurs sont sensibles aux déformations induites par le différentiel de pression interne-externe, mais aussi à la pression hydrostatique externe. Leur comportement peut alors être traduit par une relation matricielle suivante :

$$\begin{pmatrix} \Delta\lambda_t - \dfrac{\lambda_t}{\lambda_T}.\Delta\lambda_T - c.P_e \\ \Delta\lambda_z - \dfrac{\lambda_z}{\lambda_T}.\Delta\lambda_T - c.P_e \end{pmatrix} = \begin{bmatrix} M_{11} & M_{12} \\ M_{21} & M_{22} \end{bmatrix} \cdot \begin{pmatrix} P \\ \varepsilon \end{pmatrix} \qquad (10)$$

Cette relation fait intervenir la même matrice que la relation (6), l'effet de la pression hydrostatique s'exerçant de façon identique sur les deux composantes de mesure λt et λz. Dans ce second mode de réalisation, il est ainsi nécessaire de connaître la pression hydrostatique externe, soit en connaissant la profondeur d'eau, soit grâce à un capteur de pression supplémentaire, afin de soustraire son effet sur la mesure des paramètres P et ε. La résolution du système s'effectue également selon la relation (8).

La matrice de calibrage Ci est donnée à titre d'exemple pour une configuration d'encastrement du tube (conditions limites). En réalité, l'étalonnage a lieu après installation du tube avec des paramètres légèrement différents.

**3. Calcul du chargement et de la flexion**

La mesure des trois déformations axiales $\varepsilon_1$, $\varepsilon_2$, $\varepsilon_3$ permet de séparer la contribution de déformation ε due au chargement de la flexion imposée au tube. Cette flexion est caractérisée par un rayon de courbure ρ et par son orientation angulaire Ψ par rapport au boîtier central. On considère, à titre d'exemple, le cas d'une répartition des emplacements tous les 60° comme illustré sur la figure 2. Les trois paramètres ε, ρ et Ψ sont reliés par le système d'équations suivant :

$$\begin{cases} \varepsilon 1 = \varepsilon + \dfrac{\Phi}{2.\rho}.cos\,\psi \\ \varepsilon 2 = \varepsilon + \dfrac{\Phi}{2.\rho}.cos\left(\psi + \dfrac{\pi}{3}\right) \\ \varepsilon 3 = \varepsilon + \dfrac{\Phi}{2.\rho}.cos\left(\psi - \dfrac{\pi}{3}\right) \end{cases} \qquad (11)$$

où Φ est le diamètre externe du tube.

Ce système d'équations est similaire à celui des rosettes « delta » à trois jauges utilisées en analyse de déformations sur structures planes.

Ce système à trois équations permet de déterminer les trois inconnues (ε, ρ et Ψ). La déformation axiale s'écrit:

$$\varepsilon = \varepsilon_2 + \varepsilon_3 - \varepsilon_1 \qquad (12)$$

L'angle Ψ peut être déterminé par la relation:

$$tg(\Psi) = \frac{\varepsilon 3 - \varepsilon 2}{\sqrt{3}.(\varepsilon 1 - \varepsilon)} \qquad (13)$$

**EP 1 706 714 B1**

Connaissant Ψ et ε, on en déduit le rayon de courbure local ρ grâce à la première équation du système (11), en appliquant la relation trigonométrique bien connue:

$$\cos(\Psi) \;=\; \frac{1}{\sqrt{1+tg(\psi)^2}} \qquad (14)$$

Connaissant la déformation de chargement ε, on peut en déduire la condition de chargement du tube d'après la relation de Hooke appliquée à la section locale du tube :

$$F \;=\; E.S.\varepsilon \;\sim\; \frac{\pi}{2}.\Phi.t.E.\varepsilon \qquad (15)$$

Pour un tube en acier de 300 mm de diamètre et de 19 mm d'épaisseur, la relation entre la force F et la déformation est de l'ordre de 177 kg/microdéformation.

**4. Détermination du débit par détection du profil de pression**

Contrairement à une mesure de pression statique, une mesure des variations de pression ne nécessite pas de compensation thermique, ni de compensation de l'effet de chargement (inversion de la matrice de calibrage Ci). En effet, la température et le chargement axial évoluent lentement du fait de l'inertie de la structure de sorte que la mesure des surpressions peut s'effectuer directement en considérant préférentiellement les jauges collées transversalement (pour lesquelles les coefficients de sensibilités en pression sont les plus élevés).
La répartition des boîtiers en différentes positions selon l'axe du tube permet de réaliser un « débitmètre optique » qui utilise l'auto-corrélation ("cross-correlation") des mesures de variations de pression dans le temps, tel que décrit dans le document référencé [5]. Ce document décrit, en effet, le principe d'une mesure de débit par auto-corrélation, en plaçant au moins trois capteurs de pression $P_1$, $P_2$ et $P_3$ en différentes abscisses le long d'un tube et en observant l'évolution des différences de pressions $P_1$-$P_2$ et $P_2$-$P_3$ en fonction du temps. On calcule alors la fonction d'autocorrélation entre ces deux différences de pression (sur une fenêtre temporelle typique de 2 secondes) afin d'en déduire la durée de propagation des surpression de vortex à l'intérieur du fluide. L'autocorrélation ainsi réalisée permet de s'affranchir des perturbations de pressions acoustiques de longueurs d'onde plus grandes que l'intervalle entre boîtiers (effet de filtrage spatial). Connaissant la distance moyenne entre les deux prises de pressions, on peut en déduire le débit de fluide de façon non-intrusive (sans avoir à générer d'effet Venturi).

**REFERENCES**

**[1]** US 5,218,197

**[2]** "Development of an optical monitoring system for flexible risers" de M. Andersen, A. Berg et S. Saevik (Offshore Technology Conference (OTC), 13201, Houston (TX), 30 avril - 3 mai 2001)

**[3]** US 5,726,744

**[4]** "Intelligent pipelines using fiber optics sensors" de RC. Tennyson, W.D. Morison, et G Manuelpillai (SPIE, Smart structures and materials, San Diego, 2-6 mars 2003, vol. 5050, pages 295-304)

**[5]** US 6,536,291

**Revendications**

**1.** Dispositif tubulaire instrumenté pour le transport d'un fluide sous pression comprenant un tube (20) dans lequel

**13**

circule ce fluide auquel sont associés des moyens de mesure des déformations principales de ce tube, et des moyens de mesure de la température du fluide dans le tube, **caractérisé en ce que** ce tube est équipé de ces moyens de mesure fixés sur sa surface et déportés par au moins un câble optique de déport (23) vers un système de mesure optoélectronique, **en ce que** ces moyens de mesure comprennent au moins trois ensembles (B1, B2 et B3) d'au moins deux jauges optiques à réseaux de Bragg, disposés selon des directions non parallèles, ces au moins trois ensembles étant fixés en au moins trois emplacements (22) de mesure répartis en différentes positions selon l'axe du tube et orientés selon plusieurs axes de sa section, ces ensembles (B1, B2, B3) étant reliés entre eux (24) et reliés au câble optique de déport (23) par des tronçons de fibres optiques, et **en ce qu'**au moins un ensemble comprend, en outre, une jauge de température.

2. Dispositif selon la revendication 1, dans lequel les moyens de mesure sont préassemblés sur un support.

3. Dispositif selon la revendication 1, dans lequel les moyens de mesure sont fixés directement sur le câble de déport (23).

4. Dispositif selon la revendication 1, dans lesquels les moyens de mesure sont assemblés pour former au moins une rosette.

5. Dispositif selon la revendication 4, dans lequel chaque rosette forme un capteur flexible à deux dimensions.

6. Dispositif selon la revendication 1, dans lequel chaque ensemble comprend trois jauges de mesure des déformations du tube.

7. Dispositif selon la revendication 5, dans lequel chaque capteur comprend une partie de mesure des déformations (40), et une partie de mesure de 1a température (45).

8. Dispositif selon la revendication 7, dans lequel la partie de mesure des déformations (40) est constituée d'une fibre optique monomode(41), sur laquelle ont été photo-inscrits des réseaux de Bragg (42,43 et 44), enroulée et maintenue collée entre deux feuilles, les entrées-sorties de fibre étant protégées par des capillaires (51).

9. Dispositif selon la revendication 8, dans lequel les parties de fibre comportant les réseaux de Bragg (42,43 et 44) sont découvertes.

10. Dispositif selon la revendication 7, dans lequel la partie de mesure de la température (45) comprend un réseau de Bragg (46) collé sur une plaquette métallique (47).

11. Dispositif selon la revendication 10, dans lequel la plaquette métallique est de même nature que le métal du tube.

12. Dispositif selon la revendication 5, qui comprend au moins trois boîtiers de mesure (B1, B2, B3), dans lesquels sont disposés respectivement trois capteurs, isolés de la pression hydrostatique externe et reliés par des raccords tubulaires (24).

13. Dispositif selon la revendication 12, dans lequel le boîtier central (B2) est relié à l'instrumentation de mesure par un câble optique de déport (23).

14. Dispositif selon la revendication 12, dans lequel les boîtiers et les raccords sont soudés entre eux pour former un ensemble rigide.

15. Dispositif selon la revendication 12, dans lequel le câble de déport (61) est composé d'un tube d'acier inoxydable (64) rempli de gel et contenant plusieurs fibres optiques monomodes (65), d'une armure en fils d'aciers (67) séparés par des gaines de plastique.

16. Dispositif selon la revendication 15, dans lequel le boîtier central (B2) incorpore une embase (63) destinée à effectuer le raccord de connexion du câble optique de déport (61).

17. Dispositif selon la revendication 5, qui comprend au moins un ensemble de trois capteurs (71) recouverts d'un revêtement de protection (73).

**18.** Dispositif selon la revendication 17, dans lequel le revêtement (73) est un revêtement polymère d'épaisseur comprise entre 3 et 4 centimètres.

**19.** Dispositif selon la revendication 17, dans lequel une boîte de dérivation effectue la liaison entre les capteurs de chaque ensemble et un câble optique principal relié à l'instrumentation de mesure.

**20.** Dispositif selon la revendication 17, dans lequel la reprise d'effort sur le câble principal est effectuée par cerclage de ce câble le long du tube.

**21.** Dispositif selon la revendication 17, dans lequel le câble de déport est inclus dans le revêtement de protection.

**22.** Dispositif selon l'une quelconque des revendications précédentes, dans lequel le fluide transporté est un gaz ou un hydrocarbure.

**Claims**

**1.** An instrumented tubular device for transporting a pressurized fluid comprising a tube (20) in which this fluid flows, with which are associated means for measuring the main deformations of this tube, and means for measuring the temperature of the fluid in the tube, **characterized in that** this tube is equipped with measurement means fixed onto this surface and offset by at least one remote optical cable (23) towards an optoelectronic measurement system, **in that** these measurement means comprise at least three assemblies (B1, B2 and B3) of at least two optical gages with Bragg gratings, arranged along non-parallel directions, said at least three assemblies (22) being fixed in at least three measurement locations (22) distributed in different positions along the axis of the tube, and orientated along several axes of its section are distributed along the tube, these assemblies (B1, B2 and B3) being connected together (24) and connected to the remote optical cable (23) via optical fibers, and **in that** at least one assembly further comprises a temperature gage.

**2.** The device according to claim 1, wherein the measurement means are preassembled on a support.

**3.** The device according to claim 1, wherein the measurement means are directly attached on the remote cable (23).

**4.** The device according to claim 1, wherein the measurement means are assembled in order to form at least one rosette.

**5.** The device according to claim 4, wherein each rosette forms a two-dimensional flexible sensor.

**6.** The device according to claim 1, wherein each assembly comprises three gages for measuring deformations of the tube.

**7.** The device according to claim 5, wherein each sensor comprises a portion for measuring deformations (40) and a portion for measuring temperature (45).

**8.** The device according to claim 7, wherein the portion for measuring deformations (40) consists of a single mode optical fiber (41), on which Bragg gratings (42, 43 and 44) have been photo-inscribed, wound and kept bonded between two sheets, the fiber inputs-outputs being protected by capillaries (51).

**9.** The device according to claim 8, wherein the fiber portions including Bragg gratings (42, 43 and 44) are exposed.

**10.** The device according to claim 7, wherein the portion for measuring temperature (45) comprises a Bragg grating (46) bonded on a metal plate (47).

**11.** The device according to claim 10, wherein the metal plate is of the same nature as the metal of the tube.

**12.** The device according to claim 5, which comprises at least three measurement casings (B1, B2, B3), in which three sensors isolated from the external hydrostatic pressure and connected through tubular connectors (24) are positioned respectively.

**13.** The device according to claim 12, wherein the central casing (B2) is connected to the measurement instrumentation through a remote optical cable (23).

14. The device according to claim 12, wherein the casings and the connectors are welded to each other so as to form a rigid assembly.

15. The device according to claim 12, wherein the remote cable (61) consists of a stainless steel tube (64) filled with gel and containing several single mode optical fibers (65), of a weave of steel wires (67) separated by plastic sheaths.

16. The device according to claim 15, wherein the central casing (B2) incorporates a base (63) intended for making the connection with the remote optical cable (61).

17. The device according to claim 5, which comprises at least one assembly of three sensors (71) covered with a protective coating (73).

18. The device according to claim 17, wherein the coating (73) is a polymer coating with a thickness between 3 and 4 centimeters.

19. The device according to claim 17, wherein a distribution box provides the connection between the sensors of each assembly and a main optical cable connected to the measurement instrumentation.

20. The device according to claim 17, wherein spreading out of strain on the main cable is performed by strapping this cable along the tube.

21. The device according to claim 17, wherein the remote cable is included in the protective coating.

22. The device according to any of the preceding claims, wherein the transported fluid is a gas or a hydrocarbon.

**Patentansprüche**

1. Instrumentierte röhrenförmige Vorrichtung zum Transport eines unter Druck stehenden Fluids, die ein von diesem Fluid durchflossenes Rohr (20) umfasst, dem Messeinrichtungen der hauptsächlichen Verformungen dieses Rohrs und Messeinrichtungen der Temperatur des Fluids in diesem Rohr zugeordnet sind,
**dadurch gekennzeichnet, dass** dieses Rohr mit diesen Messeinrichtungen ausgerüstet ist, die auf seiner Oberfläche befestigt sind und durch wenigstens ein optisches Übertragungskabel (23) in Richtung eines optoelektronischen Messsystems übertragen werden, **dadurch** dass diese Messeinrichtungen wenigstens drei Einheiten (B1, B2 und B3) von wenigstens zwei optischen Bragg-Gitter-Messeinrichtungen umfassen, in nichtparallelen Richtungen angeordnet, wobei diese wenigstens drei Einheiten an wenigstens drei Messstellen (22) befestigt sind, die längs der Achse des Rohrs auf verschiedene Positionen verteilt und entsprechend mehreren Achsen seines Querschnitts ausgerichtet sind, wobei diese Einheiten (B1, B2, B3) durch optische Faserteilstücke miteinander verbunden sind (24) und mit dem optischen Übertragkabel (23) verbunden sind, und **dadurch**, dass wenigstens eine Einheit außerdem eine Temperaturmesseinrichtung umfasst.

2. Vorrichtung nach Anspruch 1, bei der die Messeinrichtungen auf einem Träger vormontiert sind.

3. Vorrichtung nach Anspruch 1, bei der die Messeinrichtungen direkt an dem Übertragungskabel (23) befestigt sind.

4. Vorrichtung nach Anspruch 1, bei der die Messeinrichtungen so montiert sind, dass sie eine Rosette bilden.

5. Vorrichtung nach Anspruch 4, bei der jede Rosette einen flexiblen zweidimensionalen Sensor bildet.

6. Vorrichtung nach Anspruch 1, bei der jede Einheit drei Verformungsmesseinrichtungen des Rohrs umfasst.

7. Vorrichtung nach Anspruch 5, bei der jeder Sensor einen Verformungsmessteil (40) und einen Temperaturmessteil (45) umfasst.

8. Vorrichtung nach Anspruch 7, bei der der Vorformungsmessteil (40) durch eine optische Monomodefaser (41) mit photoinduzierten Bragg-Gittern (42, 43 und 44) gebildet wird, die schleifenförmig zwischen zwei Folien verläuft und an ihnen festgeklebt ist, wobei die Fasereingänge/-ausgänge durch Kapillaren (51) geschützt sind.

9. Vorrichtung nach Anspruch 8, bei der die Teile der Faser, die Bragg-Gitter (42, 43 und 44) aufweisen, unbedeckt sind.

10. Vorrichtung nach Anspruch 7, bei der der Temperaturmessteil (45) ein Bragg-Gitter (46) umfasst, das auf ein Metallplättchen (47) geklebt ist.

11. Vorrichtung nach Anspruch 10, bei der das Metallplättchen von derselben Art wie das Metall des Rohrs ist.

12. Vorrichtung nach Anspruch 5, die wenigstens drei Messgehäuse (B1, B2, B3) umfasst, in denen sich jeweils drei Sensoren befinden, von dem hydrostatischen Außendruck isoliert und durch röhrenförmige Verbindungsstücke (24) miteinander verbunden.

13. Vorrichtung nach Anspruch 12, bei der das zentrale Gehäuse (B2) durch ein optisches Übertragungskabel (23) mit der Messinstrumentierung verbunden ist.

14. Vorrichtung nach Anspruch 12, bei der die Gehäuse und die Verbindungsstücke miteinander verschweißt sind, um eine steife Einheit zu bilden.

15. Vorrichtung nach Anspruch 12, bei der das Übertragungskabel (61) ein mit Gel gefülltes und mehrere optische Monomodefasern (65) enthaltendes nichtoxidierbares Stahlrohr (64) und eine Bewehrung aus Stahldrähten (67) umfasst, die durch Kunststoffhüllen getrennt sind.

16. Vorrichtung nach Anspruch 15, bei der das zentrale Gehäuse (B2) einen Sockel (63) umfasst, der dazu dient, das optische Übertragungskabel anzuschließen.

17. Vorrichtung nach Anspruch 5, die insgesamt wenigstens drei mit einer Schutzverkleidung (73) versehene Sensoren (71) umfasst.

18. Vorrichtung nach Anspruch 17, bei der die Verkleidung (73) eine Polymerverkleidung mit einer zwischen 3 und 4 cm enthaltenen Dicke ist.

19. Vorrichtung nach Anspruch 17, bei der ein Abzweiggehäuse die Verbindung zwischen den Sensoren jeder Einheit und einem optischen Hauptkabel realisiert, das mit der Messinstrumentierung verbunden ist.

20. Vorrichtung nach Anspruch 17, bei der die Kraftaufnahme im Hauptkabel durch Umschnürung des Rohrs mit diesem Kabel erfolgt.

21. Vorrichtung nach Anspruch 17, bei der das Übertragungskabel in die Schutzverkleidung eingeschlossen ist.

22. Vorrichtung nach einem der vorangehenden Ansprüche, bei der das transportierte Fluid ein Gas oder ein Kohlenwasserstoff bzw. Mineralöl ist.

**Fig. 1**

**Fig. 2A**

**Fig. 2B**

Fig. 3A

Fig. 3B

Fig. 3C

## Fig. 4A

## Fig. 4B

Fig. 5A

Fig. 5B

Fig. 6A

Fig. 6B

EP 1 706 714 B1